# FASCICULE DE BREVET EUROPEEN

(11) **EP 2 736 791 B1**
(45) Date de publication et mention de la délivrance du brevet: **14.03.2018**
(21) Numéro de dépôt: 12733797.0
(22) Date de dépôt: 21.06.2012
(51) Int. Cl.: B62D 21/02, B62D 21/15, B60R 19/34

(54) **LONGERON POUR CAISSE DE VÉHICULE AUTOMOBILE DE SECTION TRANSVERSALE OCTOGONALE ET VÉHICULE ÉQUIPE DE TELS LONGERONS**
FAHRGESTELLRAHMEN-SEITENLEISTE MIT ACHTECKIGEM QUERSCHNITT FÜR EINE KRAFTFAHRZEUGKAROSSERIE UND MIT SOLCHEN FAHRGESTELLRAHMEN-SEITENLEISTEN AUSGESTATTETES FAHRZEUG
MOTOR VEHICLE BODY SHELL CHASSIS FRAME SIDE RAIL OF OCTAGONAL CROSS SECTION AND VEHICLE FITTED WITH SUCH CHASSIS FRAME SIDE RAILS

(30) Priorité: 29.07.2011 FR 1156954
(43) Date de publication de la demande: 04.06.2014
(73) Titulaire: PSA Automobiles SA, 78300 Poissy (FR)
(72) Inventeur: BARBIER, Matthieu, F-75017 Paris (FR); PERU, Marc, F-92290 Chatenay Malabry (FR)
(74) Mandataire: Fosse, Danièle
(86) Numéro de dépôt international: PCT/FR2012/051419
(87) Numéro de publication internationale: WO 2013/017758

(56) Documents cités:
- DE-A1- 10 255 108
- DE-A1- 10 343 431
- DE-A1- 19 526 119
- FR-A5- 2 184 325
- US-A1- 2011 015 902

## Description

La présente invention concerne un longeron pour la caisse d'un véhicule automobile.

L'invention concerne principalement, mais non exclusivement, les deux longerons de la partie avant de la caisse d'un véhicule automobile qui sont également appelés longeronnets ou brancards.

Ces deux longerons sont constitués par un corps creux allongé dont la paroi extérieure est en acier ou en aluminium.

Ces deux longerons sont destinés à absorber l'énergie d'un choc frontal du véhicule.

La section transversale de ces longerons est le plus souvent rectangulaire.

Pour bien absorber l'énergie d'un choc frontal, ces longerons devraient s'écraser régulièrement dans l'axe du longeron.

Or, on constate que les longerons de section rectangulaire présentent des instabilités en flambement lors de la phase d'écrasement qui nuisent à la bonne absorption d'énergie.

Ce flambement est le plus souvent la conséquence d'une inertie de flexion insuffisante, aggravée dans le cas où on souhaite limiter les dimensions de l'enveloppe extérieure de construction de la section.

Pour remédier à cet inconvénient, on augmente l'épaisseur du métal des longerons et on ajoute à ceux-ci des dispositifs de déclenchement et de saturation des efforts mais cela est pénalisant en terme de masse (l'inertie étant seulement proportionnelle à l'épaisseur).

Cependant, ces solutions conduisent à une augmentation de la masse du véhicule et des mises au point longues, délicates et coûteuses

On a proposé dans DE 105 55108, un longeron constitué de deux éléments de corps creux engagés l'un sur l'autre de sections transversales différentes conformément au préambule de la revendication 1. Le but de la présente invention est de remédier à ces inconvénients.

Ce but est atteint, selon l'invention, grâce à un longeron pour la caisse d'un véhicule automobile constitué par un corps creux dont la paroi extérieure est en acier ou en aluminium, caractérisé en ce que la paroi extérieure entoure une paroi intérieure en acier ou en aluminium, cette paroi extérieure et cette paroi intérieure présentant chacune une section transversale octogonale et ces deux parois étant reliées l'une à l'autre par au moins trois ailettes en acier ou en aluminium.

Les essais effectués sur le longeron selon l'invention ont permis de constater que la paroi extérieure de section octogonale et la paroi intérieure de section octogonale absorbaient de façon optimale l'énergie d'un choc frontal et que les ailettes reliant les deux parois assuraient la stabilité en flambement du longeron.

De plus, l'inertie de flexion obtenue grâce à cette géométrie est très satisfaisante du fait de la contribution du double corps creux à section octogonale et aussi du fait que la section octogonale extérieure utilise la totalité de l'enveloppe disponible pour construire la section (l'inertie étant proportionnelle au cube du rayon).

Il a été constaté que pour limiter le flambement du longeron, en cas de choc frontal, la paroi intérieure doit être reliée à la paroi extérieure par au moins trois ailettes.

Les meilleurs résultats ont été obtenus lorsque la paroi intérieure était reliée à la paroi extérieure par six ailettes et de préférence par huit ailettes.

Dans ce dernier cas, lesdites ailettes relient chacune un sommet de l'octogone de la paroi intérieure à un sommet de l'octogone de la paroi extérieure.

Dans un mode de réalisation préféré du longeron selon l'invention, l'octogone de la paroi intérieure et l'octogone de la paroi extérieure sont symétriques par rapport à un plan commun.

Ce plan commun peut être un plan vertical lorsque le longeron est en position dans le véhicule.

L'épaisseur de la paroi intérieure du longeron peut être égale à celle de la paroi extérieure et à celle des ailettes.

Cependant, l'épaisseur de la paroi intérieure peut être différente de celle de la paroi extérieure et de celle des ailettes.

Dans un mode de réalisation particulièrement avantageux de l'invention, le longeron est en aluminium et est réalisé par extrusion.

Dans ce cas, le longeron est à la fois léger et capable d'absorber l'énergie du choc de façon optimale avec une grande stabilité au flambement.

Selon un autre aspect, l'invention concerne également un véhicule automobile dont la partie avant de la caisse est équipée de deux longerons selon l'invention.

D'autres particularités et avantages de l'invention apparaîtront encore tout au long de la description ci-après.

Aux dessins annexés, donnés à titre d'exemples, non limitatifs :
- la figure 1 est une vue latérale partielle d'un longeron selon l'invention,
- la figure 2 est une vue en coupe transversale d'un longeron selon l'invention,
- la figure 3 est une vue en perspective partielle du longeron selon la figure 2, après avoir été soumis à un test de choc frontal,
- la figure 4 est une vue en coupe transversale d'une réalisation simplifiée d'un longeron selon l'invention,
- la figure 5 est une vue analogue à la figure 3 montrant le résultat du test de choc effectué sur le longeron représenté sur la figure 4,
- la figure 6 est une vue en coupe transversale d'un longeron ne faisant pas partie de l'invention,
- la figure 7 montre le résultat du test de choc effectué sur le longeron de la figure 6,
- la figure 8 est une vue en coupe transversale d'un autre longeron ne faisant pas partie de l'invention,
- la figure 9 montre le résultat du test de choc effectué sur le longeron de la figure 8.

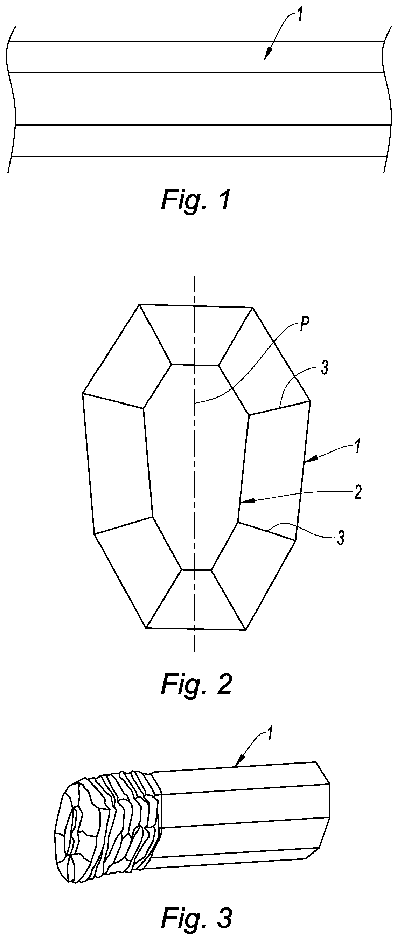

Les figures 1 et 2 représentent un longeron avant de la caisse d'un véhicule selon l'invention.

Ce longeron est appelé brancard ou longeronnet et est conçu pour absorber l'énergie d'un choc frontal du véhicule.

Comme montré sur la figure 2, la paroi extérieure 1 entoure une paroi intérieure 2 présentant chacune une section transversale octogonale.

De plus ces deux parois 1, 2 sont reliées l'une à l'autre par des ailettes 3.

Dans la version préférée de l'invention, telle que représentée sur la figure 2, le nombre des ailettes 3 est égal à huit.

Ces ailettes 3 relient chacune un sommet de l'octogone de la paroi intérieure 2 à un sommet de l'octogone de la paroi extérieure 1.

De plus, dans cet exemple, l'octogone de la paroi intérieure 2 et l'octogone de la paroi extérieure 1 sont symétriques par rapport à un plan commun P qui peut être vertical lorsque le longeron est monté sur le véhicule.

Dans l'exemple représenté, le longeron est en aluminium et peut être réalisé par extrusion.

L'épaisseur de la paroi extérieure 1 peut être égale à celle de la paroi intérieure 2 et à celle des ailettes 3.

A titre d'exemple, cette épaisseur peut être comprise entre 1 et 2 mm.

Bien entendu, l'épaisseur de la paroi extérieure 1 peut être différente de celle de la paroi intérieure 2 et de celle des ailettes 3.

Les résultats du test de choc frontal effectué sur le longeron représenté sur la figure 2 montrent (voir figure 3) que l'extrémité du longeron est régulièrement écrasé en formant de multiples plis répartis axialement et que le longeron ne présente aucune trace de flambement.

Ce résultat s'explique notamment par la présence des ailettes 3 qui relient les parois 1 et 2 de forme octogonale.

Les tests de choc effectués contre un mur incliné de 5 ou 10° par rapport à un plan perpendiculaire à la direction du véhicule ont montré également d'excellents résultats.

D'excellents résultats ont également été obtenus lorsque le nombre des ailettes 3 est réduit à six.

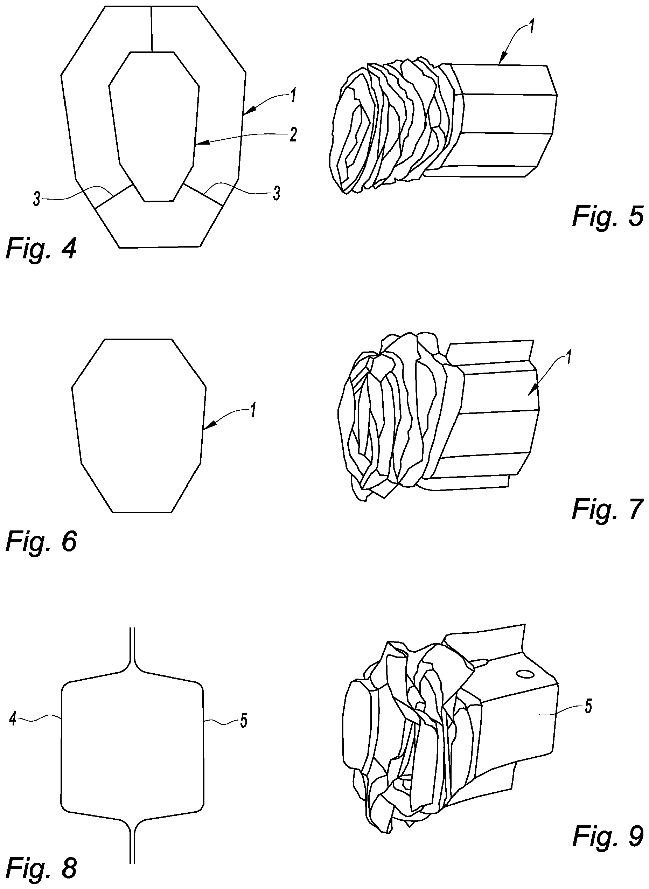

Les résultats sont encore acceptables lorsque le nombre des ailettes 3 est réduit à trois, comme montré sur la figure 4.

La figure 5 montre cependant que dans ce cas les plis formés sur l'extrémité du longeron, lors de la phase d'écrasement, présentent une plus grande amplitude et sont moins réguliers.

Cependant, aucun flambement n'est observé.

A titre de comparaison, la figure 6 représente un longeron de section transversale octogonale dépourvu de paroi intérieure et d'ailettes.

La figure 7 montre que les résultats du test de choc effectué sur le longeron représenté sur la figure 6 sont beaucoup moins bons que dans le cas des longerons selon l'invention décrits plus haut.

Les plis formés sur l'extrémité du longeron sont beaucoup plus irréguliers et absorbent moins d'énergie.

Dans ce cas, le longeron présente un risque sérieux de flambement.

La figure 8 représente la section rectangulaire classique d'un longeron constitué par deux tôles en acier 4, 5 soudées l'une à l'autre.

Dans cet exemple, la tôle 4 a une épaisseur de 1,76 mm et la tôle 5 a une épaisseur égale à 1,47 mm.

Le résultat du test de choc montré sur la figure 9 est le plus mauvais de ceux représentés sur les figures.

Dans ce cas, le risque de flambement du longeron est très sérieux dans une zone espacée de l'extrémité écrasée du longeron.

De plus, les longerons représentés sur les figures 2 à 5 présentent un rapport effort / masse beaucoup plus favorable que dans le cas du longeron en acier représenté sur la figure 8.

L'invention pourrait bien entendu s'appliquer à des longerons en acier et à d'autres longerons que des brancards ou longeronnets.

## Revendications

1. Longeron pour une caisse de véhicule automobile constitué par un corps creux dont la paroi extérieure (1) est en acier ou en aluminium, **caractérisé en ce que** la paroi extérieure (1) entoure une paroi intérieure (2) en acier ou en aluminium, cette paroi extérieure (1) et cette paroi intérieure (2) présentant chacune une section transversale octogonale et ces deux parois (1, 2) étant reliées l'une à l'autre par au moins trois ailettes (3) en acier ou en aluminium.

2. Longeron selon la revendication 1, **caractérisé en ce que** la paroi intérieure (2) est reliée à la paroi extérieure (1) par six ailettes (3).

3. Longeron selon la revendication 1, **caractérisé en ce que** la paroi intérieure (2) est reliée à la paroi extérieure (1) par huit ailettes (3).

4. Longeron selon l'une des revendications 1 à 3, **caractérisé en ce que** lesdites ailettes (3) relient chacune un sommet de l'octogone de la paroi intérieure (2) à un sommet de l'octogone de la paroi extérieure (1).

5. Longeron selon l'une des revendications 1 à 4, **caractérisé en ce que** l'octogone de la paroi intérieure (2) et l'octogone de la paroi extérieure (1) sont symétriques par rapport à un plan commun (8).

6. Longeron selon l'une des revendications 1 à 5, **caractérisé en ce que** l'épaisseur de la paroi intérieure (2) est égale à celle de la paroi extérieure (1) et à celle des ailettes (3).

7. Longeron selon l'une des revendications 1 à 5, **caractérisé en ce que** l'épaisseur de la paroi intérieure (2) est différente de celle de la paroi extérieure (1) et de celle des ailettes (3).

8. Longeron selon l'une des revendications 1 à 7, **caractérisé en ce qu'**il est en aluminium et est réalisé par extrusion.

9. Véhicule automobile dont la partie avant de la caisse est équipée de deux longerons selon l'une des revendications 1 à 8.

## Patentansprüche

1. Längsträger für eine Kraftfahrzeugkarosserie, bestehend aus einem Hohlkörper, dessen Außenwand (1) aus Stahl oder aus Aluminium besteht, **dadurch gekennzeichnet, dass** die Außenwand (1) eine Innenwand (2) aus Stahl oder aus Aluminium umgibt, wobei diese Außenwand (1) und diese Innenwand (2) jeweils einen achteckigen Querschnitt aufweisen und diese zwei Wände (1, 2) miteinander durch mindestens drei Rippen (3) aus Stahl oder aus Aluminium verbunden sind.

2. Längsträger nach Anspruch 1, **dadurch gekennzeichnet, dass** die Innenwand (2) mit der Außenwand (1) durch sechs Rippen (3) verbunden ist.

3. Längsträger nach Anspruch 1, **dadurch gekennzeichnet, dass** die Innenwand (2) mit der Außenwand (1) durch acht Rippen (3) verbunden ist.

4. Längsträger nach einem der Ansprüche 1 bis 3, **dadurch gekennzeichnet, dass** die Rippen (3) jeweils einen Gipfel des Achtecks der Innenwand (2) mit einem Gipfel des Achtecks der Außenwand (1) verbinden.

5. Längsträger nach einem der Ansprüche 1 bis 4, **dadurch gekennzeichnet, dass** das Achteck der Innenwand (2) und das Achteck der Außenwand (1) in Bezug auf eine gemeinsame Ebene (8) symmetrisch sind.

6. Längsträger nach einem der Ansprüche 1 bis 5, **dadurch gekennzeichnet, dass** die Stärke der Innenwand (2) gleich der der Außenwand (1) und der der Rippen (3) ist.

7. Längsträger nach einem der Ansprüche 1 bis 5, **dadurch gekennzeichnet, dass** die Stärke der Innenwand (2) von der der Außenwand (1) und der der Rippen (3) unterschiedlich ist.

8. Längsträger nach einem der Ansprüche 1 bis 7, **dadurch gekennzeichnet, dass** er aus Aluminium besteht und durch Extrusion hergestellt wird.

9. Kraftfahrzeug, dessen Vorderteil der Karosserie mit zwei Längsträgern nach einem der Ansprüche 1 bis 8 ausgestattet ist.

## Claims

1. A chassis frame side rail for a body shell of a motor vehicle constituted by a hollow body, the outer wall (1) of which is made of steel or of aluminium, **characterized in that** the outer wall (1) surrounds an inner wall (2) made of steel or of aluminium, this outer wall (1) and this inner wall (2) each having an octagonal cross section and these two walls (1, 2) being connected to one another by at least three fins (3) made of steel or of aluminium.

2. The chassis frame side rail according to Claim 1, **characterized in that** the inner wall (2) is connected to the outer wall (1) by six fins (3).

3. The chassis frame side rail according to Claim 1, **characterized in that** the inner wall (2) is connected to the outer wall (1) by eight fins (3).

4. The chassis frame side rail according to one of Claims 1 to 3, **characterized in that** said fins (3) each connect a summit of the octagon of the inner wall (2) to a summit of the octagon of the outer wall (1).

5. The chassis frame side rail according to one of Claims 1 to 4, **characterized in that** the octagon of the inner wall (2) and the octagon of the outer wall (1) are symmetrical with respect to a common plane (8).

6. The chassis frame side rail according to one of Claims 1 to 5, **characterized in that** the thickness of the inner wall (2) is equal to that of the outer wall (1) and to that of the fins (3).

7. The chassis frame side rail according to one of Claims 1 to 5, **characterized in that** the thickness of the inner wall (2) is different from that of the outer wall (1) and of that of the fins (3).

8. The chassis frame side rail according to one of Claims 1 to 7, **characterized in that** it is made of aluminium and is realized by extrusion.

9. A motor vehicle, the front part of the body shell of which is equipped with two chassis frame side rails according to one of Claims 1 to 8.
